# EUROPEAN PATENT APPLICATION

(11) **EP 4 632 995 A1**
(43) Date of publication of application: **15.10.2025**
(21) Application number: 24169849.7
(22) Date of filing: 12.04.2024
(51) Int. Cl.: H02J 7/00

(54) **ENERGY STORAGE CELL MONITORING**

(71) Applicant: Instagrid GmbH, 71636 Ludwigsburg (DE)
(72) Inventor: Berning, Sebastian, 71636 Ludwigsburg (DE); Gutknecht, Philipp, 71636 Ludwigsburg (DE); Zürner, Raphael, 71636 Ludwigsburg (DE)
(74) Representative: Eisenführ Speiser

(57) **Abstract**

The present teaching relates to a monitoring system operable to monitor a module of energy storage cells in an electrical power unit, which monitoring system comprises: a first monitoring circuit operable to monitor physical parameters of the module of energy storage cells; a second monitoring circuit operable to monitor at least some of the physical parameters independently of the first monitoring circuit; wherein, both monitoring circuits are operable to bring the module of energy storage cells into a safe state independently from each other in response to any of the monitored physical parameters violating their respective threshold value. The present teachings also relate to monitoring methods and software products.

## Description

The present teachings relate generally to monitoring of energy storage cells in an electrical power unit. The present teachings relate to systems, methods, and software products for monitoring of energy storage cells.

Electrical power units, such as for example power packs for providing off-grid electrical energy to different loads are known. The electrical power unit may be in the form of a portable power pack for supplying different loads or appliances with electrical power. The electrical power unit may provide an AC power at the output and may also be chargeable via an input when connected to AC power. As such, the electrical power unit may comprise one or more electrical sockets for operating power appliances, e.g., tools on constructions sites, lighting devices, emergency appliances (e.g., pumps) or any kind of mobile device.

Such an electrical power unit may comprise one module or multiple modules of energy storage cells. Typically, physical parameters of a module of energy storage cells are monitored to ensure that during operation of the electrical power unit the physical parameters of the module of energy storage cells are within the specifications, e.g., below respective threshold values. In order to operate the electrical power unit in a safe manner, in response to one of the physical parameters violating their specific threshold value, the electrical power unit and/or its specific modules may be brought to a safe state.

An object of the present disclosure is to provide a monitoring system which is operable to monitor a module of energy storage cells, by means of which a safe use of an electrical power unit can be achieved. The module of energy storage cells may be part of an electrical power unit, such as a power pack, comprising at least one and preferably multiple modules of energy storage cells.

The object will be shown solved by the subject matter of the herein appended independent claims. Certain additional improvements will be appreciated from the dependent claims and the following specification.

A monitoring system operable to monitor a module of energy storage cells, e.g., in an electrical power unit, pursuant to the present teachings comprises:
- a first monitoring circuit operable to monitor physical parameters of the module of energy storage cells;
- a second monitoring circuit operable to monitor at least some of the physical parameters independently of the first monitoring circuit;
wherein, the second monitoring circuit is operable to bring the module of energy storage cells into a safe state in response to any of the monitored physical parameters violating their respective threshold value.

In certain non-limiting embodiments, the first monitoring circuit is operable to measure the physical parameters. The first monitoring circuit may thus provide measured values of the physical parameters at any given time. The measurements may be done continuously, or they may be intermittently done with equal or unequal time between successive measurements. Moreover, measurements of different physical parameters may be done differently, e.g., at least some of the physical parameters being measured continuously and/or at least some of the physical parameters being measured intermittently with equal or unequal time between successive measurements of those respective parameters.

As discussed above, the electrical power unit may be a stand-alone power pack for providing off-grid power to an electrical load (e.g., an appliance). The electrical power unit may comprise one module of energy storage cells or multiple modules of energy storage cells. The electrical power unit for example comprises between 4 and 50 battery modules, e.g., each battery module comprising between 3 and 15 energy storage cells. The values mentioned herein are to be considered merely illustrative and non-limiting to the scope and generality of the present teachings.

In certain non-limiting aspects, the first monitoring circuit may be operable to measure just the physical parameters of the module of energy storage cells, or the first monitoring circuit may be operable also to measure at least some physical parameters of the other modules in the electrical power unit. Hence, the electrical power unit may comprise either a dedicated first monitoring circuit for each module, or it may comprise a single first monitoring circuit for a group of modules, or even a first single monitoring for all modules in the electrical power unit. Additionally, or alternatively, at least one first monitoring circuit is arranged in a communicative coupling to a central processor (e.g., computer processor, a microcontroller, or their likes), e.g., providing physical parameters of the module(s) (e.g., parameters of their energy storage cells) to the central controller (e.g., a control unit). Additionally, or alternatively, at least one first monitoring circuit is disposed to receive instructions from the central controller for operating switches of one or more of the modules. The switches may be operable to output a pre-determined voltage at an output of the module(s), and preferably at an output of the electrical power unit.

Energy storage cells may be of any kind, e.g.: electrical battery (e.g., lithium-ion battery), capacitors (e.g., supercapacitors), any other rechargeable cells or battery, their likes, or their combinations. Multiple energy storage cells may be aggregated to different modules.

The monitoring system is operable to monitor at least one module of energy storage cells. The monitoring system may also be operable to monitor several modules which are interconnected. For example, several modules can be connected in series and are monitored by the monitoring system according to the present teachings.

The monitoring system comprises a first monitoring circuit operable to monitor (e.g., by measuring) predetermined physical parameters of the module of energy storage cells. For example, each module of energy storage cells may comprise a first monitoring circuit to monitor the physical parameters of the specific module of energy storage cells. According to certain non-limiting aspects, the physical parameters may comprise any one or more of: cell voltage, cell current and/or cell temperature of one or more energy storage cells. The physical parameters may in addition or as an alternative be a module voltage, a module current and/or a module temperature of a module.

According to a non-limiting embodiment, the monitoring system comprises a communicative coupling (e.g., a communication bus) disposed to transmit the physical parameters of the module measured by the first monitoring circuit, e.g., to a control unit (e.g., central controller). The communicative coupling may be any bus, e.g., field bus, CAN bus, Modbus, Profibus, Interbus, isoSPI, or the like or their derivates. Several modules may be interconnected via the communicative coupling to e.g., the control unit. For example, several modules may be connected in a daisy chain fashion. The control unit may comprise one or more processors.

For example, the control unit may be operable to receive the measured physical parameters. The control unit may monitor those parameters, e.g., by comparing the physical parameters measured by the first monitoring circuit with their respective threshold values (e.g., for the module of energy storage cells). These threshold values may, e.g., comprise any one or more of: a first maximum or minimum cell voltage, a first maximum or minimum cell current, a first maximum or minimum cell temperature, a first maximum or minimum module voltage, a first maximum or minimum module current and/or a first maximum or minimum module temperature. If at least one of the threshold values is violated by their respective measured physical parameters, the control unit may generate at least one instruction signal to bring the respective module and/or the electrical power unit to a safe state.

It shall be appreciated that by safe state, it is meant a state in which certain parts and/or the electrical power unit is prevented from progressing towards an undesired state. Non-limiting examples of an undesired state are any one or more of the situations: overtemperature, overcharge, overcurrent, overvoltage, undervoltage, undercharge, leakage current, or their likes for a specific module and/or the electrical power unit. The undesired state can thus be one that can cause minor or major risk to: the electrical power unit, any of the components of the unit, electrical input and/or load connected to the electrical power unit, or a user of the unit. For example, the control unit may bring the electrical power unit and/or the specific module(s) by switching them "OFF" or by disabling those to reach a safe state. In some discussions, such a disabled module may be called a "defective module" in the following.

In the disclosure, for brevity, the term "disable" may be used interchangeably with the features "bringing at least one module and/or the electrical power unit to a safe state" without affecting the scope and generality of the present teachings. Thus, e.g., when saying "...circuit disables a module...", it is intended to cover, "...circuit brings a module and/or the electrical power unit to a safe state...".

A control unit may be operable to use the measured physical parameters to manipulate the operation of the electrical power unit. For example, the control unit may adapt the charging and/or discharging parameters of the electrical power unit or of individual one or more modules, respectively.

The communicative coupling, e.g., communication bus, can be usable to receive at least one instruction signal generated by the control unit. The instruction signal transmitted via the communicative coupling can be used to operate at least one switching device of the module of energy storage cells.

The monitoring system further comprises a second monitoring circuit to monitor at least some of the physical parameters of the module of energy storage cells independently of the first monitoring circuit. The second monitoring circuit may be operable to monitor all or some of the physical parameters independently from the first monitoring circuit. Each module may comprise a second monitoring circuit, respectively. According to non-limiting aspects, the cell voltage, the cell current, the cell temperature, the module voltage, the module current and/or the module temperature may be monitored (e.g., directly) by the second monitoring circuit.

The second monitoring circuit is operable to bring the module of energy storage cells in a safe state. The safe state may be triggered in response to any of the monitored physical parameters violating their respective threshold value, e.g., a second maximum or minimum cell voltage, a second maximum or minimum cell current, a second maximum or minimum cell temperature, a second maximum or minimum module voltage, a second maximum or minimum module current and/or a second maximum or minimum module temperature. The second threshold values may or may not be equal to the first maximum threshold values. Hence, either none, some, or all of the second threshold values may be equal to the corresponding first maximum threshold values. In some non-limiting examples, the second threshold values are larger than the first threshold values. During operation of an electrical power unit, where both, the first monitoring circuit and the second monitoring circuit are working properly, the module may be disabled based on violation of the lower threshold values by the physical parameters measured by the first monitoring circuit. In such situations, the second monitoring circuit is used to improve safety of the module(s) and the electrical power unit in case of any failure via the first monitoring circuit, e.g., incorrect sensor reading or any other failure in the signal chain starting from a sensor, the first monitoring circuit, the communicative coupling, the central processor, and the corresponding mechanism of bringing the module(s) and/or the electrical power unit to a safe state.

A monitoring system according to the present teachings ensures a safe operation of an electrical power unit with one or multiple modules of energy storage cells, with a first monitoring circuit and a second monitoring circuit, wherein said second monitoring circuit works as an independent and redundant monitoring circuit in addition to the first monitoring circuit.

In a non-limiting embodiment, the second monitoring circuit is operable to bring a defective module and/or the electrical power unit to a safe state independently from the first monitoring circuit. For example, the second monitoring circuit is operable to disable the module (in case, any of the monitored physical parameters violate their respective threshold limit, as discussed above) via a disabling device which is not controllable via the first monitoring circuit. Such a disabling device can e.g., be a fuse, which will be discussed further below. In addition to the independent monitoring of the physical parameters of the cell, also an independent disabling of the module is realized, improving safe operation of the electrical power unit further.

According to a further non-limiting embodiment, the first monitoring circuit is connected to a control unit, e.g., via the discussed communicative coupling, wherein the control unit is designed to receive the measured physical parameters of the module of energy storage cells acquired by the first monitoring circuit. The control unit is operable to generate at least one instruction signal used to disable the module and/or the electrical power unit (e.g., to set the module and/or the power unit to a safe state). The control unit may be operable to evaluate whether the physical parameters measured by the first monitoring circuit violate their respective threshold limits and in response to this the control unit may be operable to generate at least one instruction signal used to disable the defective module (e.g., to set the module and/or the electrical power unit to a safe state).

A module may be disabled - amongst other means - by disconnecting the energy storage cells from an output port and input port via one or more switching devices. In some non-limiting embodiments, the switching devices are controllable to selectively connect one or more energy storage cells to a power port (e.g., the input port and/or output) of the battery module. In a connected state, the energy storage cell(s) are able to receive electrical energy (e.g., as a charging current), or to supply electrical energy (e.g., discharging by supplying an electrical load). In a disconnected state, the switching device(s) for example bypasses the energy storage cells of the module. For example, the module of energy storage cells may comprise an H-bridge inverter with four switching devices (e.g., FETs, BJTs, IGBTs, MOSFETs, their likes or combinations). When the low-side (switches connected between the low polarity of the energy storage cell(s) and respective terminals of power port of the module) switches are enabled, the energy storage cell(s) are isolated from the power port, but the module still allows current to flow between the port terminals. Such a mode can be termed a bypass mode, in which a given module does not contribute electrical energy to the electrical power unit, but it allows a current flow (e.g., from other modules connected in series). Alternatively, the module may be fully isolated by entering a high impedance (Hi-Z) state. In a Hi-Z state, all four H-bridge switches may be disabled thus isolating the power port terminals.

During normal operation, the energy storage cell(s) may be connected to the power port either in a predetermined polarity (e.g., positive or negative polarity) by operating the switching device(s) appropriately, e.g., by operating the H-bridge switches such that the port terminals is connected in a given order with the energy storage cell(s). The two polarity configurations of the module may be called a first polarity (e.g., positive polarity) and a second polarity inverted to the first (e.g., negative polarity) respectively. The H-bridge inverter is well known in the art, so specific switches are not essential or limiting to the present disclosure.

From the aforementioned, it shall be appreciated that the switching device may comprise at least four electrical switch elements. The electrical switch elements may be interconnected as an H-bridge. For example, the electrical switch elements may be MOSFETs, particularly N-channel MOSFETs. The electrical switch elements may have, as a non-limiting example, a breakdown voltage of between around 30 V and around 100 V.

In addition, or as an alternative, the control unit may be operable to transmit a first instruction signal to one or more modules via the control channel. The first instruction signal may comprise control signals for one or more modules for providing a pulse-width modulation (PWM) output at their power ports. The PWM output can be duty-cycle and polarity varied to obtain a desired output voltage with a certain polarity (e.g., a sinusoidal voltage). The first instruction signal may also set one or more modules into bypass or Hi-Z mode, as discussed above. The bypass mode of one module can be considered as a local safe state for this module, while the Hi-Z mode will be activated for all modules at the same time initiating a global safe state.

In addition, or as an alternative, the control unit may be operable to transmit a second instruction signal, via a global alert line (e.g., any electrical channel such as a wire, or a bus). The global alert line may be a communicative coupling, as discussed above, or it may be a different coupling similar or different as compared to the communicative coupling. For example, the global alert line may connect the control unit to one or more control circuits (e.g., PWM decoders) of some or all modules, respectively. The second instruction signal may be used by the multiple control circuits to generate a switch-off signal to deactivate the respective switching devices (Hi-Z mode). In response to the second instruction signal all modules are deactivated. The electrical power unit is set to a - as referred herein - global safe state.

In addition, or as an alternative, the control unit is operable to transmit a third instruction signal to a switching device of the respective, defective module. The switching device is controllable to selectively connect the energy storage cell to a power port of the module. For example, the third instruction signal can be a "Disable" signal transmitted to a voltage regulator connected to the switching device. E.g., in response to the third instruction signal, the voltage regulator may cut the power supply of a gate driver of the switching device, bringing the switching device to a Hi-Z state, and therefore disconnect the energy storage cells from the power port of the module, thus preventing an unsafe condition (e.g., an overcurrent caused by parts of the defective switching device).

The control unit may be operable to send the third instruction signal over the communicative coupling, for example the above described communication bus, com-municatively connecting first monitoring circuit to the control unit.

In addition, or as an alternative, the second monitoring circuit is operable to be powered ON whenever electrical power is available at energy storage cells. In other words, the second monitoring circuit is powered via the energy storage cells if the cells have sufficient charge to keep the second monitoring circuit operative. The second monitoring circuit may thus be powered by the module of energy storage cells. Whenever the energy storage cells of a module are available for supplying power, the second monitoring circuit is powered ON. In a non-limiting aspect, the second monitoring circuit remains powered ON, even when the electrical power unit is switched off. E.g., the second monitoring circuit is powered by at least one charged energy storage cell even when the electrical power unit is neither in charge mode nor in discharge mode. In other words, the second monitoring circuit is operative even if the electrical power unit is not in operation. It can be understood that this sustained (e.g., "always ON") operation of the second monitoring circuit improves the safety of an electrical power unit, as a quasi-permanent monitoring of the energy storage cells is achieved. Only in cases, where all energy storage cells are deeply discharged or depleted, no monitoring via the second monitoring circuit may be possible. It shall also be appreciated that when the electrical power unit is switched OFF (e.g., not powering a load, or the unit is not being charged) several key components such as the control unit and even the first monitoring circuit may be put in a low-power state (e.g., switched OFF completely or put in a sleep-mode) to save power (e.g., preserve charge state of the unit). This can have a disadvantage that the modules are left unsupervised. By running the second monitoring circuit independently, and synergistically with other features (e.g., global control signal and/or global alert line), the second monitoring circuit can be used to ensure that the defective module(s) and/or the electrical power unit do not power up even in cases when a threshold would have been violated in a unit switched-off condition. This can thus significantly improve safety of the module(s) and the unit.

In contrast, the first monitoring circuit may only be available (e.g., powered ON or operating) when the electrical power unit is switched on. In certain cases, also the first monitoring circuit may be operable to be powered ON whenever electrical energy is available at the energy storage cells.

As discussed above, the second monitoring circuit is operable to disable the module via a disabling device which is not controllable via the first monitoring circuit.

According to a non-limiting embodiment, the disabling device is a fuse. The fuse may be in the form of a sacrificial device (e.g., melting conductor), which upon activating irreversibly disconnects the respective module from the corresponding power port. According to a non-limiting embodiment, in response to the second monitoring circuit detecting violation of a threshold value by one of the physical parameters of the cell, the disabling device is activated (e.g., tripped). The disabling device (e.g., fuse) may be tripped by any suitable mechanism, electrical and/or chemical. For example, in response to the violation a heater of the disabling device is activated which melts a conductive path which connects energy storage cells(s) of a module to their power port, thereby breaking open the conductive path. When the conductive path (e.g., a wire) is melted the conductive connection between the cell(s) and the power port is broken thus electrically isolating the cell(s) from the power port (e.g., terminals of the port). Alternative to a heater, other mechanisms e.g., a chemical based activation are also possible. Thus, according to a non-limiting example, the fuse may be triggered by a heating element, controlled by the second monitoring circuit, and powered by at least one energy storage cell. The heating element can be a resistive heater. As a consequence of heating, the fuse melts. When the fuse is in line with a power bus (e.g., a connection between the cell(s) and the power port), the power bus is interrupted and the module is disabled. The energy storage cell is electrically disconnected from a power port of the defective module. It shall be appreciated that the term "power port" encompasses any number of terminals via which the module receives or supplies power. For example, power port may refer to two terminals which are used for both receiving and supplying power, or power port may refer to at least one terminal each dedicated for receiving and supplying power, respectively.

The above described disabling of the respective module via the disabling device can be regarded as a module-based disabling, where only the respective, defective module is disabled.

In a further non-limiting example, the control unit may be operable to monitor the state of the disabling device. For example, the control unit is operable measure a voltage at (e.g., behind) the disabling device towards the energy storage cells side. For example, the control unit may measure the state (e.g., voltage) via the communication bus and the first monitoring circuit. Particularly during start-up and shutdown of the electrical power unit, the control unit may measure the state (e.g., applied voltage) at the disabling device to check whether the disabling device has been activated (e.g., tripped) or not.

In response to detecting the activated disabling device, the control unit may bring the module(s) and/or the electrical power unit into a safe state (e.g., shutdown). This can further improve the security, as a defective module disabled by means of the tripping of the disabling device controlled by the second monitoring circuit, is detected further by the control unit and the control unit is then operable to prevent normal operation mode (e.g., until the disabling device is replaced after inspection).

In a further non-limiting embodiment, the second monitoring circuit may be operable to generate an alert signal used to disable all modules. For example, the alert signal may be transmitted via a global alert line to further modules and/or to the control unit. The global alert line may be the same as the one operable to transmit the second instruction signal, but it can also be a separate global alert line. The global alert line may be a communicative coupling according to the ones discussed above. The alert signal generated by the second monitoring circuit may be received by control circuits (e.g., PWM decoders) of all modules including the defective module. The control circuits may be operable to receive the alert signal and upon receiving such an alert signal to generate a switch-off signal, used to set the electrical switch elements in a disabled state (e.g., Hi-Z state).

The global alert line and the second monitoring circuit may be two isolated circuits. Signals provided by the second monitoring circuit may be transferred, by e.g., an optocoupler or any other suitable means, to the global alert line.

According to the discussed non-limiting embodiment, the second monitoring circuit may be operable to disable all modules of the electrical power system, upon detecting that any one or more of the physical parameters of a module of energy storage cells violate their respective threshold limit.

In a further non-limiting embodiment, the monitoring system may comprise a voltage sense circuit disposed to detect an overvoltage on the power bus, which power bus connects the energy storage cells with a power terminal of the module. The voltage sense circuit may be further operable to provide an alert signal in response to detecting the predetermined overvoltage. The overvoltage may be lower than a specified operation voltage of at least one of the electrical switch elements, and preferably lower than a breakdown voltage of the electrical switch elements.

The voltage sense circuit may comprise a Zener diode, which Zener diode has a specific reverse blocking voltage lower or equal than the respective overvoltage to be prevented. The Zener diode may be arranged in one line of the power bus between the voltage regulator and the global alert line in a way, that the Zener diode blocks current flowing from the power bus to the global alert line. In case of an overvoltage at the Zener diode it is arranged such that the Zener diode will experience a reverse breakdown and a current will flow from the power bus through the Zener diode. The current flow may be transferred (e.g., via an optocoupler, arranged in a galvanic isolation to the power bus) to an alert signal, the alert signal used at least to disable a respective module and/or the electrical power unit.

The alert signal may also be transmitted via the global alert line to further modules. The global alert line may be the same or separate to above-discussed global alert lines. The global alert line may interconnect the multiple modules, for example via their control circuits (e.g., PWM decoders), as discussed above.

The voltage sense circuit can protect a respective module from accidental overheating. In case the defective and disabled module gets powered by other modules and current flows through a body diode of an electric switch element of the switching device in forward direction and through a body-diode of another switch element in reverse direction (from one input/output contact to the other one), the switch element in reverse direction can be exposed to its high reverse breakdown voltage multiplied by the current flowing, provoking high thermal losses. The switch element in reverse direction can generate heat, which might also affect the energy storage cells and this may lead to a damage and/or thermal runaway of the energy storage cells.

The voltage sense circuit can be regarded as an independent or as an additional safety feature, operable to disable some or all modules independent of the other safety features relating to the first monitoring circuit. As a multi-failure scenario, should the global alert line somehow not latch, and the second monitoring circuit is somehow disabled (e.g., energy storage cells of a module are depleted), the voltage sense circuit can protect the module.

The present teachings can also relate to an H-bridge inverter module comprising:
- an electrical energy storage unit;
- a power bus to which the electrical energy storage unit is connected;
- a power port;
- at least four electrical switch elements controllable to connect the power bus to the power port;
- a voltage sense circuit disposed to detect an overvoltage on the power bus; wherein the overvoltage is larger than a reverse blocking voltage of the electrical switch elements, and
wherein the voltage sense circuit is operable to provide an alert signal in response to detecting the overvoltage.

The electrical energy storage unit may consist of one energy storage cell or may also be an aggregation of multiples energy storage cells.

The power bus may comprise two terminals between which the energy storage unit is disposed. The energy storage unit may supply power at the power bus (e.g., a voltage between the two terminals of the power bus) in a discharge mode. Optionally, in a charge mode, the energy storage unit may receive power via the power bus, e.g., for charging the one or more energy storage cells.

The at least four electrical switch elements may be controlled to connect the one or more energy storage cells, via the power bus, to the power port in different modes. Said modes may include two polarity modes in which the energy storage cells provide a voltage at the power port in a specific polarity in each polarity mode. The modes may even include a bypass mode, and a Hi-Z mode as discussed herein. The power port may comprise two or more terminals.

Thus, the power port may be disposed to receive electrical energy for charging the electrical energy storage unit in a charge mode, and to supply electrical energy stored in the electrical energy storage unit in a discharge mode.

The H-bridge inverter comprises at least four electrical switch elements controllable to connect the power bus to the output terminal in either the same or preferable in different polarity, e.g., in order to provide an AC voltage at the power port.

The voltage sense circuit is disposed to detect an overvoltage on the power bus, wherein the overvoltage is larger than a reverse blocking voltage of the switching device and/or at least one of the electrical switch elements. The voltage sense circuit may be operable to provide an alert signal in response to detecting a pre-determined value of overvoltage. The predetermined value of overvoltage may be lower than a breakdown voltage value of the electrical switch elements.

The alert signal may be provided via the global alert line, e.g., connecting different modules of energy storage cells. The alert signal is used to disable all modules connected via the global alert line.

It shall be appreciated that the H-bridge inverter module may be an embodiment of the module of energy storage cells as discussed herein.

The voltage sense circuit may comprise a Zener diode, which Zener diode has a specific reverse blocking voltage lower than the respective overvoltage to be prevented. Thus, the reverse blocking voltage of the diode may be selected as the predetermined value of overvoltage. The Zener diode may be arranged in line of the power bus e.g., between a voltage regulator and the global alert line, in a way that the Zener diode blocks current flowing from the power bus to the global alert line. In case of an overvoltage at the Zener diode, the Zener diode is designed (e.g., by selecting the reverse blocking voltage of the diode as the predetermined value of overvoltage) so as to experience a reverse breakdown such that a current will flow from the power bus through the Zener diode. The current flow may be converted (e.g., via an optocoupler, arranged in a galvanic isolation to the power bus) to an alert signal, the alert signal used at least to disable the respective module and preferably further modules or even the electrical power unit.

For further details relating to the voltage sense circuit, it is referred to the description above.

The present teachings further relate to an electrical power unit with a monitoring system according to the previous description. The electrical power unit comprises one or multiple modules of energy storage cells and an AC output terminal.

The present teachings further relate to a monitoring method, for example a method for operating a monitoring system operable to monitor modules of energy storage cells according to the teachings discussed above. The method comprises the steps of measuring physical parameters of the module of energy storage cells by means of a first monitoring circuit; monitoring at least some of the physical parameters independently of the first monitoring circuit by means of a second monitoring circuit; wherein, the second monitoring circuit brings the module of energy storage cells in a safe state in response to any of the monitored physical parameters violating their respective threshold limit.

According to an aspect, there can also be provided a method for monitoring energy storage cells, which method comprising:
- measuring, via a first monitoring circuit, physical parameters of the energy storage cells;
- monitoring, via a second monitoring circuit, at least some of the physical parameters independently of the first monitoring circuit; and
- bringing the module of energy storage cells to a safe state in response to any of the monitored physical parameters violating their respective threshold limit.

It shall be appreciated that the energy storage cells may be arranged within one or more modules. It shall also be appreciated that each module may comprise an individual second monitoring circuit for monitoring at least some of the physical parameters of the respective module.

The present teachings can also provide a system comprising means for performing any of the methods (e.g., any method steps) herein disclosed. Additionally, there can also be provided a software product comprising instructions, which when executed by a system comprising means (e.g., a suitable processor), cause the system (e.g., processor) to perform any of the methods (e.g., any method steps) herein disclosed.

In a non-limiting embodiment, the module and/or the electrical power unit may be brought to a safe state upon violation of the respective thresholds by physical parameters monitored by the first monitoring circuit. A first instruction signal may be generated to bring one, several or all modules into a safe state. When only one module is brought to a safe state, the switching device of this module may be brought into a bypass state. When all modules are brought to a safe state, the switching devices may be brought into a Hi-Z state. A second instruction signal may be a global alert signal upon which the energy storage cells are disconnected from the power port of the module (Hi-Z state). A third instruction signal may be a "disable" signal to a voltage regulator. The third instruction signal may also disconnect the energy storage cells from the power port of the module (Hi-Z state).

In a further non-limiting example, the second monitoring circuit brings the module and/or electrical power unit to a safe state by irreversibly disconnecting the energy storage cells from the corresponding power port, e.g., by activating a disabling device, such as for example a fuse.

Additionally, or as an alternative, upon detection of a violation of respective thresholds by physical parameters monitored by the second monitoring circuit the module and/or electrical power unit is brought to a safe state by generating an alert signal.

In a further example an overvoltage on the power bus is detected, which power bus connects the energy storage cells with a power terminal of the module. An alert signal in response to detecting the predetermined overvoltage may be generated. The alert signal may be used to bring all modules of energy storage cells into a safe state.

The present teachings also relate to a software product comprising instructions, which when executed by a suitable processor (e.g., control unit of an electrical power unit), cause the processor or the electrical power unit to perform the methods (e.g., any method steps) herein disclosed.

Certain embodiments and details are now described in conjunction with the following figures which present non-limiting examples of the present teachings. Shown on:
- Fig. 1: is a block diagram of an electrical power unit with a monitoring system
- Fig. 2: is a block diagram of an H-bridge inverter module and
- Fig. 3: is a flow-chart of an example method for monitoring a module.

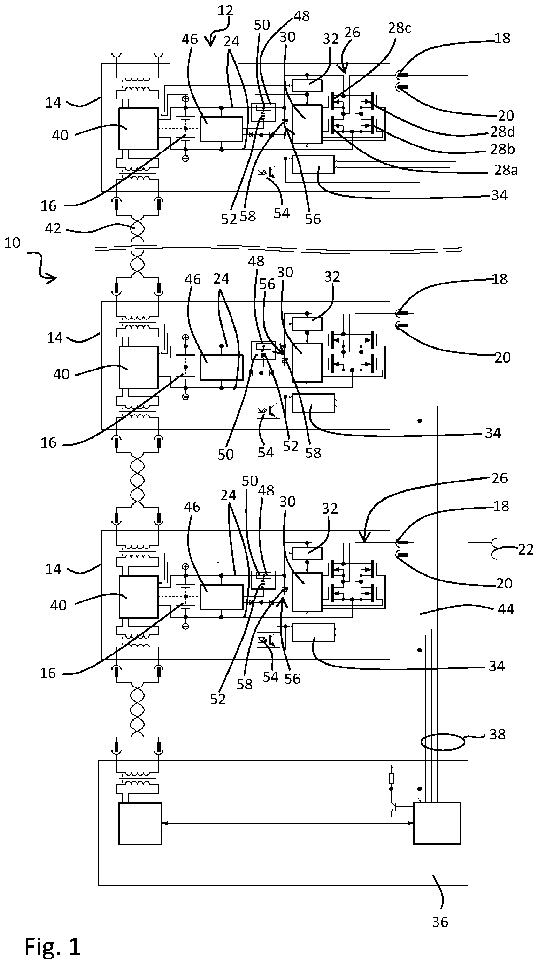

Figure 1 shows an electrical power 10 unit with a monitoring system 12 to monitor at least one module 14 of energy storage cells of the electrical power unit 10.

The electrical power unit 10 comprises several modules 14, wherein only three modules are shown in Fig. 1. Each of the modules 14 comprises energy storage cells 16.

Each module 14 comprises a power port with terminals 18 and 20, coupled to a unit port 22 via which electrical energy may be received for charging the energy storage cells 16 in a charge mode. Additionally, or alternatively, electrical energy stored in the energy storage cells 16 may be supplied via the same port 22, or via another port, in a discharge mode.

The energy storage cells 16 are connectable to the power port via respective terminals of a power bus 24. In the positive circuit of the power bus 24 a disabling device 48 is disposed.

Each module 14 further comprises a switching device 26. In this example, the switching device 26 comprises four electrical switch elements 28a-d (e.g., MOSFETs), for selectively connecting the energy storage cells 16 to the power port terminals 18 and 20 of the corresponding module 14. The electrical switch elements 28a-d are shown here interconnected in the form of an H-bridge circuit.

In order to operate the switching device 26 each module 14 has an isolated gate driver 30 which is supplied by a voltage regulator 32. The isolated gate driver 30 is connected to a control circuit 34 shown here as PWM decoder. The control circuit 34 is operable to generate a switching signal for the isolated gate driver 30. In some cases, the PWM decoder 34 may simply decode an instruction signal from a control unit 36.

The switching device 26 is provided between the power port terminals 18 and 20 of the module 14 and is operable to provide different connection states at the power port. These may be,
- a first polarity state in which the energy storage cells 16 are connected to the power port terminals 18 and 20 in a first polarity (e.g., a + polarity),
- a second polarity state in which the energy storage cells 16 are connected to the power port terminals 18 and 20 in a second polarity which is opposite of the first polarity (e.g., a - polarity),
- a bypass stage in which the lower two of the electrical switch elements 28a, 28b (the MOSFETs connected to the - line of the energy storage cells 16) are switched ON and in which the upper two of the electrical switch elements 28c, 28d (the MOSFETS connected to the + line of the energy storage cells 16) are switched OFF,
- and a Hi-Z state in which all four of the electrical switch elements 28a-d are switched OFF.

It shall be appreciated that in the bypass mode of a module 14, a current flow between the energy storage cells 16 and the power port terminals 18, 20 is prevented, however current may still flow between the terminals 18 and 20 of the power port.

The electrical power unit 10 comprises a control unit 36. The control unit 36 is connected to each control circuit (PWM decoder) 34 via a respective control channel 38.

The monitoring system 12 comprises a first monitoring circuit 40. In Fig. 1, each module 14 comprises a first monitoring circuit 40. The first monitoring circuit 40 is operable to monitor physical parameters of each corresponding module 14 of energy storage cells 16.

In Fig. 1, the multiple first monitoring circuits 40 of respective modules 14 are connected via a communicative coupling 42, shown here as a communication bus, to the control unit 36. The multiple first monitoring circuits 40 are shown in this example connected in a daisy chain fashion to the control unit 36.

The communication bus 42 is disposed to transmit the physical parameters measured by the first monitoring circuit 40 to the control unit 36. The control unit 36 is capable of comparing the acquired physical parameters to respective threshold values. If violation of either one of the threshold values is determined by the control unit 36, the control unit 36 is operable of performing one or several measures to set the respective module 14 in a safe state (e.g., disable the module), of which physical parameters have been detected as exceeding. In some cases, the control unit 36 may disable all modules 14.

The control unit 36 is operable to transmit a first instruction signal over the control channel 38 to the PWM decoder 34 of the respective defective module 14. The first instruction signal transmitted via the control channel 38 is used by the respective PWM decoder 34 to bring the switching device 26 in a Hi-Z or bypass state, thereby disconnecting the corresponding energy storage cells 16 from the module power port with terminals 18, 20.

The control unit 36 is operable to assert a global alert line 44. The global alert line 44 interconnects the PWM decoders 34 of all modules 14 and is also connected to the control unit 36. Upon receiving a second instruction signal via the global alert line 44, the PWM decoders 34 of all modules 14 place their switching device 26 in a Hi-Z mode, thereby disconnecting the energy storage cells 16 from the power port terminals 18/20.

The control unit 36 is operable to generate a third instruction signal, e.g., a "disable" signal transmitted via the communication bus 42 to the voltage regulator 32. The third instruction signal is used by voltage regulator 32 to cut the power supply of the gate driver 30 resulting in a Hi-Z state in which the module 14 is disabled and the energy storage cells 16 are disconnected from the power port terminals 18, 20.

Further, the monitoring system 12 comprises several second monitoring circuits 46 to monitor physical parameters of a corresponding module 14. The second monitoring circuit 46 is operable to measure at least some of the physical parameters independently of the first monitoring circuit 40.

The second monitoring circuit 46 is operable to compare the physical parameters to their respective threshold values, and in response to any of the monitored physical parameters violating their respective threshold value, the second monitoring is operable to disable the module 14 via a disabling device 48 which is not controllable via the first monitoring circuit 40.

The disabling device 48 in this example is a fuse 50 controllable via the second monitoring circuit 46 and arranged in line with the power bus 24. The fuse 50 is sensitive to overtemperature and can be a melting fuse and/or a chemical fuse. In order to disable the defective module 14, the second monitoring circuit 46 activates a heater 52, which when the temperature rise is high enough causes conductive path of the fuse 50 to be broken, hence interrupting the current flow between the energy storage cells 16 and the power port terminals 18, 20.

By tripping of the fuse 50, the energy storage cells 16 are irreversibly disconnected from providing current via the power bus 24. Thus, current is prevented to flow between the power port terminals 18, 20 and the energy storage cells 16 until the fuse 50 is replaced, e.g., after a safety inspection. The voltage regulator 32 and the isolated gate driver 30 in line with the power bus 24 are also disconnected from the energy storage cells 16, especially in terms of flow of current.

The second monitoring circuit 46 is further operable to generate an alert signal in response to any of the monitored physical parameters violating their respective threshold limit. The alert signal is transmitted via the global alert line 44 to the control circuit (PWM decoders) 34 of all modules 14 and also to the control unit 36.

The monitoring system 12 further comprises a voltage sense circuit 56 disposed to detect an overvoltage on the power bus 24. The voltage sense circuit 56 comprises a Zener diode 58, arranged in blocking direction in from the power bus 24 to the global alert line 44 in a way, that the Zener diode 58 blocks current flowing from the power bus 24 to the global alert line 44. In case of an overvoltage at the Zener diode 58, the Zener diode 58 will experience a reverse breakdown and a current will flow from the power bus 24 through the Zener diode 58. The current flow is transferred by means of an optocoupler 54 to an alert signal transmitted via the global alert line 44, the alert signal can be used to bring all modules 14 in a safe state (e.g., disable). The alert signal may also be used to issue a warning, e.g., a fault signal which the electrical power unit 10 can display to the user.

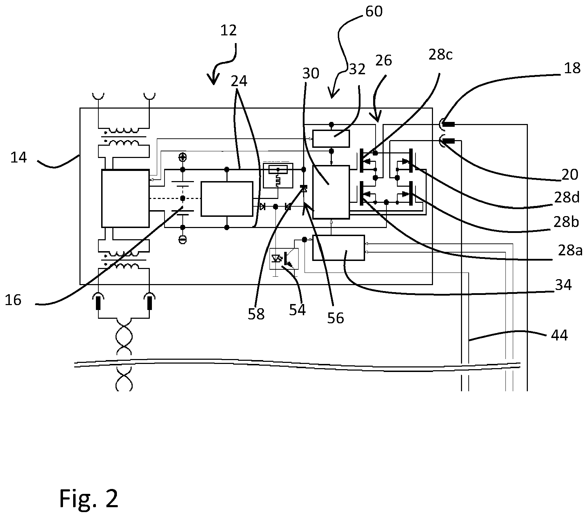

Fig. 2 shows an H-bridge inverter module 60 comprising an electrical energy storage unit 14 comprising multiple energy storage cells 16. The H-bride inverter module 60 comprises a power bus 24 between which the electrical energy storage unit 14 is connected.

The power bus 24 connects the electrical energy storage unit 14 to a power port, shown here comprising terminals 18 and 20.

The H-bridge inverter module 60 comprises a switching device 26 with four electrical switch elements 28a-d controllable to connect the power bus 24 to power port terminals 18, 20. The switching device 26 is operable to selectively switch the module voltage to the power port with terminals 18, 20 of the energy storage unit 14. The electrical switch elements 28a-d are interconnected in the form of an H-bridge circuit.

In order to operate the switching device 26 each module 14 has an isolated gate driver 30 and a voltage regulator 32, connected to the isolated gate driver 30. The isolated gate driver 30 is connected to a control circuit 34, shown here as PWM decoder. The PWM decoder 34 is operable to decode signals from the instruction signal received from the control unit 36 (refer to Fig. 1).

The switching device 26 is provided between the power port with terminals 18/20 of the module 14 and is operable to provide different connection states at the power port discussed above.

Further, the H-bridge inverter module 60 comprises a voltage sense circuit 56 disposed to detect an overvoltage on the power bus 26.

The voltage sense circuit 56 is disposed to detect an overvoltage on the power bus 24. The voltage sense circuit 56 comprises a Zener diode 58, arranged in blocking direction from the power bus 24 to the global alert line 44 in a way, that the Zener diode 58 blocks current flowing from the power bus 24 to the global alert line 44 or optocoupler 54, respectively. In case of an overvoltage at the Zener diode 58, the Zener diode 58 will experience a reverse breakdown and a current will flow from the power bus 24 through the Zener diode 58. The current flow is transferred by means of an optocoupler 54 to an alert signal transmitted via the global alert line 44, the alert signal can be used to put all modules 14 in a safe state (e.g., disable). The alert signal may also be used to issue a warning, e.g., a fault signal which the unit can display to the user.

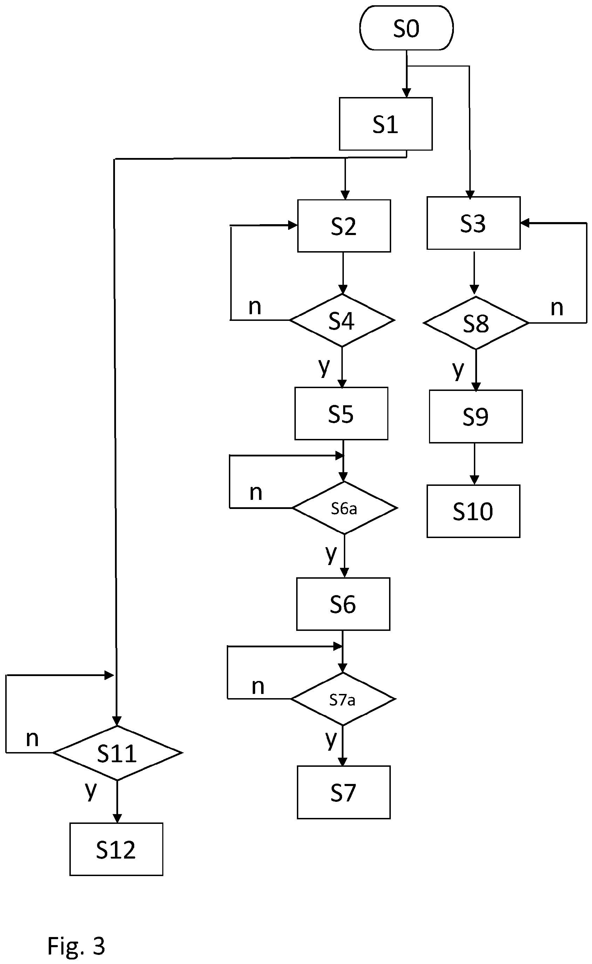

Fig. 3 shows a flow-chart for to a method for monitoring modules 14 of energy storage cells 16.

In step S0 the method starts.

In step S1 an electrical power unit 10 with multiple modules 14 is switched on.

In step S2 physical parameters of the module 14 of energy storage cells 16 are measured, e.g., via a first monitoring circuit 40.

In step S4, the measured physical parameters of the first monitoring circuit 40 are compared to respective threshold limits. If in step S4 a violation of a respective threshold limit is detected (y=yes), a first instruction signal is generated in step S5 e.g., to safely shut down the module 14 or all modules 14. The first instruction signal may be transmitted via the control channel 38 to a PWM decoder 34, bringing the respective module 14 or all modules 14 in a safe state.

If in step S4 no violation is detected (n=no), the method may revert back to step S2.

In optional step S6a it may be evaluated whether the violation of the respective threshold limits is "severe", whereby "severe" may be determined by how much the measured value violates the respective threshold value, and/or whether step S5 has not been successful in bringing one or all modules 14 in a safe state. If in step S6a a severeness or failure of S5 is determined (y=yes), then in step S6 a second instruction signal is generated, which may be a global alert signal transmitted via the global alert line 44, bringing all modules 14 in a safe state. If in step S6a, it is determined that the violation is not severe and S5 did not fail (n=no), then the monitoring is continued with step S6a again. As an alternative, this process path could end here.

Additionally, or alternatively to step S6a, in step S7a it is evaluated whether steps S5 and S6 have failed in bringing one or all modules 14 in a safe state. If in step S7a a failure of S5 and S6 is determined (y=yes) , then instep S7 a third instruction signal may be generated and transmitted e.g., to the voltage regulator 32, bringing the respective module 14 into a safe state. If in step S7a, it is determined that the violation is not severe and S5 and S6 did not fail (n=no), then the monitoring is continued with step S7a. Alternatively, this process path could be ended here.

In step S3, simultaneously and/or independently to step S2, at least some of the physical parameters of the module 40 are monitored by a second monitoring circuit 46. The second monitoring circuit 46 monitors the physical parameters of the module 14, optionally preferably also when the electrical power unit 10 is switched off.

In step S8, it is evaluated, whether any of the monitored physical parameters of the second monitoring circuit 46 violate their respective threshold limit. If in step S8 it is determined that there is a violation of threshold limits (y=yes), then in step S9, the second monitoring circuit 46 brings the module 14 in a safe state e.g., by disconnecting the energy storage cells 16 from the power port terminals 18/20. In optional step S10 a global alert signal may be generated, bringing all modules 14 in a safe state, e.g., if the electrical power unit 10 is switched on. In case the electrical power unit 10 is switched off, the other modules 14 should already be in a safe state.

If in step S8 no violation is detected (n=no), it is proceeded with step S3.

In a parallel process path, additionally or alternatively, in step S11 it is evaluated whether an overvoltage on the power bus 24 is detected; if y=yes, then an alert signal in response to detecting the overvoltage is generated in Step S12. The alert signal may be used to bring all modules 14 of energy storage cells 16 into a safe state.

If in step S12 no violation is detected (n=no), the method may repeat step S11.

### Reference list

- 10: electrical power unit
- 12: monitoring system
- 14: module/ energy storage unit
- 16: energy storage cells
- 18: terminal
- 20: terminal
- 22: unit port
- 24: power bus
- 26: switching device
- 28a-d: electrical switch element
- 30: isolated gate driver
- 32: voltage regulator
- 34: PWM decoder
- 36: control unit
- 38: control channel
- 40: first monitoring circuit
- 42: communication bus
- 44: global alert line
- 46: second monitoring circuit
- 48: disabling device
- 50: fuse
- 52: heater
- 54: optocoupler
- 56: voltage sense circuit
- 58: Zener diode

- 60: H-bridge inverter module

Although embodiments or aspects have been described in detail for the purpose of illustration, it is to be understood that such detail is solely for that purpose and that the disclosure is not limited to the disclosed embodiments or aspects, but, on the contrary, is intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect. Aspects which might have been discussed in this disclosure with reference to product category are also combinable with method category and vice-versa.

For purposes of the description, the terms "end," "upper," "lower," "right," "left," "vertical," "horizontal," "top," "bottom," "lateral," "longitudinal," and derivatives thereof shall relate to the embodiments as they are oriented in the drawing figures. However, it is to be understood that the present disclosure may assume various alternative variations and step sequences, except where expressly specified to the contrary. The terms "first," "second," or "third" and their likes have been used to establish a reference to the corresponding feature. For the purposes of scope of the present teachings, saying "first" or "second" does not mean that a particular feature must be attached with a particular sequence or order to be valid. It is also to be understood that the specific devices and processes illustrated in the attached drawings, and described in the following specification, are simply examples and non-limiting embodiments or aspects of the disclosed subject matter. Hence, specific dimensions and other physical characteristics related to the embodiments or aspects disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments or aspects, refer to a condition for automatically triggering an action (e.g., a specific operation of an electronic device, such as a computing device, a processor, and/or the like).

## Claims

1. A monitoring system operable to monitor a module of energy storage cells, which monitoring system comprises:
- a first monitoring circuit operable to monitor physical parameters of the module of energy storage cells;
- a second monitoring circuit operable to monitor at least some of the physical parameters independently of the first monitoring circuit;
wherein, the second monitoring circuit is operable to bring the module of energy storage cells into a safe state in response to any of the monitored physical parameters violating their respective threshold value.

2. Monitoring system according to the preceding claim, wherein the second monitoring circuit is operable to disable the module of energy storage cells independently from the first monitoring circuit.

3. Monitoring system according to any of the preceding claims, wherein the first monitoring circuit is connected to a control unit, wherein the control unit is operable to receive the physical parameters measured by the first monitoring circuit and wherein the control unit is operable to generate at least a first instruction signal used to disable the module.

4. Monitoring system according to any of the preceding claims, wherein the second monitoring circuit is operable to be powered ON whenever electrical power is available at energy storage cells.

5. Monitoring system according to any of the preceding claims, wherein the second monitoring circuit is operable to disable the module via a disabling device which is not controllable via the first monitoring circuit.

6. Monitoring system according to the preceding claim, wherein the disabling device in a tripped state irreversibly disconnects an energy storage cell from a power bus connecting the energy storage cell with a power terminal of the module.

7. Monitoring system according to any of the preceding claims 5 and 6,
wherein a control unit is operable to monitor the state of the disabling device.

8. Monitoring system according to any of the preceding claims, wherein the second monitoring module is operable to generate an alert signal in response to any of the monitored physical parameters violating their respective threshold value, the alert signal used to bring all modules of energy storage cells into a safe state.

9. Monitoring system according to any of the preceding claims, comprising a voltage sense circuit disposed to detect an overvoltage on a power bus, which power bus connects the energy storage cells with a power terminal of the module, and wherein the voltage sense circuit is operable to provide an alert signal in response to detecting the overvoltage.

10. Monitoring system according to the preceding claim, wherein the voltage sense circuit comprises a Zener Diode, wherein the Zener diode is arranged to block currents flowing via the power bus to a global alert line.

11. Method for monitoring energy storage cells, wherein the method comprises:
- measuring, via a first monitoring circuit, physical parameters of the energy storage cells;
- monitoring, via a second monitoring circuit, at least some of the physical parameters independently of the first monitoring circuit;
- bringing the module of energy storage cells to a safe state in response to any of the monitored physical parameters violating their respective threshold limit.

12. Method of claim 11, wherein the energy storage cells are arranged within one or more modules.

13. Method of claim 12, wherein each module comprises an individual second monitoring circuit for monitoring at least some of the physical parameters of the respective module.

14. A system comprising means for performing the steps of any of the above method claims.

15. Software product comprising instructions, which when executed by a suitable processor, cause the processor to perform the method steps according to any of the above method claims.
